# EUROPEAN PATENT SPECIFICATION

(11) **EP 1 843 343 B1**
(45) Date of publication and mention of the grant of the patent: **10.10.2012**
(21) Application number: 07113366.4
(22) Date of filing: 02.08.2001
(51) Int. Cl.: G11B 20/00, G06F 21/00

(54) **Method and device for controlling distribution and use of digital works**
Verfahren und Gerät zum Kontrollieren des Verteilens und der Benutzung von Digitalwerken
Procédé et dispositif de contrôle de la répartition et l'utilisation de travaux numériques

(30) Priority: 16.08.2000 EP 00202888
(43) Date of publication of application: 10.10.2007
(62) Divisional of application: 01969564.2
(73) Proprietor: Koninklijke Philips Electronics N.V., 5621 BA Eindhoven (NL)
(72) Inventor: Treffers, Menno A., 5656 AA Eindhoven (NL); Staring, Antonius A., 5656 AA Eindhoven (NL)
(74) Representative: Damen, Daniel Martijn

(56) References cited:
- EP-A- 0 984 346
- EP-A- 1 005 040

## Description

The present invention relates to a method and device for controlling distribution and use of a digital work. Furthermore, the present invention relates to a record carrier for storing the digital work.

A fundamental issue facing the publishing and information industries as they consider electronic publishing is how to prevent unauthorised and unaccounted distribution of usage of electronically published materials. Electronically published materials are typically distributed in a digital form and created on a computer-based system having the capability to recreate the materials. Audio and video recordings, software, books and multimedia works are all being electronically published. Royalties are paid for each accounted for delivery, such that any unaccounted distribution results in an unpaid royalty.

The transmission of digital works over networks such as the widely used Internet is nowadays usual practice. The Internet is a widespread network facility by which computer users in many universities, corporations and government entities communicate and trade ideas and information. Thus, it would be desirable to utilise such networks for distribution of digital works without the fear of wide-spread unauthorized copying.

The apparent conversions between consumer appliances and computers, increasing network and modem speeds, the declining costs of computer power and band- widths, and the increasing capacity of optical media will combine to create a world of hybrid business models in which digital contents of all kinds may be distributed on optical media played on at least occasionally connected appliances and/or computers, in which the one-time purchase models common in music CDs and initial DVD (digital video disc) movie offerings are augmented by other models, for example, lease, pay-per-view, and rent to own, to name just a few. Consumers may be offered a choice among these and other models from the same or different distributors and/or other providers. Payment for use may happen over a network and/or other communication channels to some payment settlement service. Consumer usage and ordered information may flow back to creators, distributors, and/or other participants.

The elementary copy protection technologies for recordable optical discs now being introduced cannot support these and other sophisticated models.

Document US-A 5 629 980 discloses a method and device for controlling distribution and use of a digital work as define in the preamble of claims 1 and 13, wherein a digital or usage right is acquired together with the purchase. This usage right limits how a music track purchased on Internet, downloaded, and stored in scrambled form on a recordable optical disc can be used. These digital rights are also called usage rules or usage rights. For example, the buyer may be allowed to make three copies for a personal use, a fourth copy will be refused. Alternatively, the buyer may be allowed to play a specific track four times, whereas the optical disc drive will not play a fifth time.

The usage rights are stored preferably on the optical disc. In this case, the usage rights travel together with the music and the disc will play on all disc players that support this feature.

An Electronic Music Download (EMD) application used to download the music track from the Internet has to store several pieces of information on the disc, e. g. the scrambled audio track, the key needed to descramble the audio track, and a description of the usage rights. Some of the usage rights can be decreased (i.e. consumed) when they are used.

The rule "three copies for personal use", for instance, becomes "two copies for personal use" after one copy has been made. The usage right therefore contains counters that can be updated when a usage right has been exercised.

Any equipment which is arranged to access the downloaded track should comply with the rules underlying the purchased usage rights. That is, only authorised, trusted, playback equipment should be able to read the key, and set the usage rights or counters.

Therefore, a non-compliant application which may copy tracks without updating the counter, increment counters without paying additional fees, or make an identical copy of the disk with the same usage rights should be prevented.

As regards a bit-by-bit copy operation using a standard disc drive, a Unit Disc Identifier (UDI) has been suggested, which may be written by the disc manufacturer on the disc in a way that can be read by the playback equipment, but cannot be modified. If a recordable disc has a UDI, this identifier can be combined with or incorporated in a scrambling key of the audio track. A bit-by-bit copy of the concerned disc onto another record carrier cannot be descrambled anymore, since the other record carrier will have a different UDI, such that the scrambling key cannot be recovered anymore.

However, a "copy and restore attack" or "replay attack" may be used to circumvent the above UDI solution. In this case, a standard disc drive is used to determine those bits which have been changed on the disk when a usage right is consumed. These bits typically relate to the counters of the usage rights and are therefore copied to another storage medium. Then, the usage right is consumed, e. g. by making copies, until a copy-counter has reached zero and no further copies are allowed. The determined and stored bits are restored from the storage medium back onto the disc. Now, the disc is in a state which pretends that the usage rights have not been consumed or exercised, such that the user may continue making copies. In this case, the UDI-dependent scrambling key has no influence on the copy operation, since the disc has not been changed.

Furthermore, document WO-A-97/43761 discloses a rights management arrangement for storage media such as optical digital video discs, wherein a secure "software container" is used to protectively encapsulate a digital work and corresponding usage right information. Furthermore, an encrypted key block is stored on the disc, which provides one or more cryptographic keys for use in decrypting the digital work. The decryption keys for decrypting the key block are also stored on the record carrier in the form of a hidden information, stored in a location which can be physically enabled by a corresponding firmware or jumper of the disc drive, such that it maybe accessible for disc players but not for personal computers. Thus, any attempt to physically copy the disc by a personal computer would result in a failure to copy the hidden keys.

However, even this cryptographic protection method may not prevent a successful "copy and restore attack", since a potential hacker restores the detected and copied usage right data back to their original location on the same disc. Then, the hacker may play again the track for which the usage rights have been exercised, without paying again. It is noticed that the hacker does not have to read or write the hidden keys to circumvent the protection mechanism. Thus, the "copy and restore attack" is useful for rights that are consumed, such as a right to play once, a right to make a limited number of copies (where a copy counter on the disk is incremented after each copy), or a right to move a track from one disc to another (where the track on the original disc is deleted).

It is therefore an object of the present invention to provide a method and device for controlling distribution and use of a digital work based on an attached usage right information, and a corresponding record carrier, by means of which a circumvention of the usage rights by a "copy and restore attack" can be prevented.

This object is achieved by a method as defined in claims 1 and 10 and by a device as defined in claim 17.

Accordingly, the usage right information is re-written and a new hidden information used for encrypting or verifying the usage right information is stored, when the usage right information has changed. Thus, a simple restoring operation of the usage right information in the course of a "copy and restore attack" merely restores the previous usage right information but does not restore the previous hidden information. However, due to the fact that the changed hidden information no longer fits or corresponds to the previous or original usage right information, a decryption or a verification of the usage right information is no longer possible, such that the protection system of the disc player will recognise the attempt of fraud. A "copy and restore attack" of the hidden channel will not work, since non- compliant devices are not capable of reading or writing on the hidden channel.

According to an advantageous development, the hidden information may be a checksum over a data block containing the usage right information. In this case, the usage right information does not have to be encrypted on the record carrier. Any manipulation of the content of the usage right information can be prevented by calculating the checksum and storing this checksum in the hidden channel. A "copy and restore" attack does not work, since the hidden checksum which has been changed with the update of the usage right information will no longer be valid for the restored original usage right information.

Alternatively, according to another advantageous development, the hidden information may be a key used for a decrypting the usage right information, wherein the key is randomly changed and the usage right information is re-encrypted by using the changed key, when the usage right information has changed. The restoring of the old version of the usage right information will not work, since the changed key cannot be used for decrypting the original usage right information.

Preferably, the previous key is destroyed after the change of the key. Thereby, the key used for encrypting the original usage right information can no longer be retrieved and a potential hacker cannot decrypt the original usage right information.

Preferably, the hidden channel may be generated by: storing the hidden information in deliberate errors which can be corrected again; storing the hidden information in merging bits of a runlength-limited code; controlling a polarity of a predetermined runlength of a predetermined word of a runlength-limited code, according to the hidden information; storing the hidden information in deliberate errors in a time-base; or storing the hidden information in a memory embedded with a disc controller. Thereby, a hidden channel can be provided which cannot be read or written by existing or conventional disc drives. Even by a firmware update, they may not be able to read or write the hidden channel. In particular, a modification of the respective integrated circuits is required for copying or reading the hidden channel. This, however, is expensive and requires corresponding expert knowledge. The known lead-in areas of record carriers are not sufficient to provide such a hidden channel, since the conventional disc drives may give access to these areas by simple firmware hacking operation.

According to a further advantageous modification, the attached usage right information may be stored in a table together with a key information used for decrypting the digital work. Thus, the key information required for decrypting the digital work can no longer be decrypted after a "copy and restore attack". The digital work may be an audio track downloaded from the Internet to a recordable optical disc.

Preferably, the usage right information comprises a counter information which can be updated when the usage right has been exercised. Thus, the change of the counter information leads to a re-writing and re-encrypting operation with a new hidden key, such that a detection and restoring of the updated counter values is useless due to the changed hidden decryption key.

According to a further advantageous modification, each track of the recording medium may comprise its on usage right information and hidden information. In this case, a hidden key is provided for each track of the record carrier, as long as the hidden channel provides enough capacity.

In the following, the present invention will be described in greater detail based on a preferred embodiment with reference to the accompanying drawings, of which: Fig. 1 shows a modification of a key-locker table and a hidden key after a copy operation, according to the preferred embodiment of the present invention, Fig. 2 shows a basic block diagram of a driving device for driving a record carrier according to the preferred embodiment of the present invention, and Fig. 3 shows a basic flow diagram of a secure update of a usage right information, according to the preferred embodiment of the present invention.

The preferred embodiment will now be described on the basis of an EMD from the Internet onto a record carrier such as a recordable optical disc, where a music track is purchased, downloaded and stored on the record carrier.

Nevertheless, in the present application, the term "digital work", refers to any work that has been reduced to a digital representation. This includes any audio, video, text or multimedia work and any accompanying interpreter (e. g. software) that may be required for recreating the work. The term "usage rights" refers to any rights granted to a recipient of a digital work. Generally, these rights define how a digital work can be used and if it can be further distributed. Each usage right may have one or more specified conditions which must be satisfied for the right to be exercised. The usage rights are permanently "attached" to the digital work. Copies made of a digital work will also have usage rights attached. Thus, the usage rights and any associated fees assigned by a creator and subsequent distributor will always remain with a digital work.

According to the preferred embodiment, all secrets, e.g. usage rights, keys, counters, an own identification of the disc or any information which is to be stored in a tamper-free way, are stored together in a table which is called a key-locker table KLT. The key-locker table KLT is encrypted e. g. by a DES algorithm and stored on the disc in any convenient location. The key used for encrypting the key-locker KLT is called the key-locker key KLK. This key KLK is stored on the disk in a special hidden channel or secure side channel which cannot be read or written by existing or conventional disc drives. In particular, the hidden channel must be arranged such that a firmware update of existing disc drives is not sufficient to enable a reading or writing operation of the hidden channel.

The hidden channel must be hidden very deeply in the physical characteristics of the recorded data stream, record carrier or disc drive, such that a change of the integrated circuits is required to read or write to the hidden channel with existing disc drives. Some possibilities for implementing such a hidden channel are:
(i) storing the hidden information (key) in deliberate errors of the data stream, which can be corrected again;
(ii) storing the hidden information in merging bits of a runlength-limited code sequence;
(iii) storing the hidden information by controlling the polarity of a predetermined runlength of a predetermined data or control symbol of a runlength-limited code sequence, according to the hidden information ; or
(iv) storing the hidden information in deliberate errors in the time-base of the data stream.

However, any other hidden channel suitable to prevent a reading or writing of the hidden information with existing disc drives can be implemented.

The key-locker table KLT is re-written each time its content is changed, e.g. when the usage right is consumed. Then, a new random key-locker key KLK is used each time the key-locker table KLT is re-written.

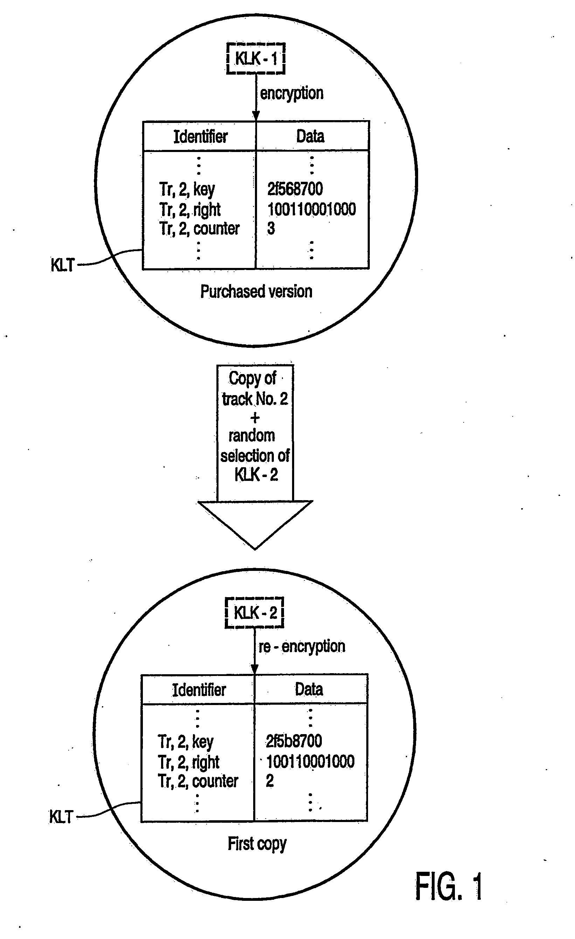

Fig. 1 shows a purchased version of the key-locker table KLT written on a recordable optical disc, which is encrypted by a first key-locker key KLK-1 stored in a hidden channel of the optical disc, e.g. as indicated above. In the example shown in Fig. 1, the user has purchased a right to make three copies of track No. 2. In the key-locker table KLT shown in Fig. 1, only the content relevant to track No. 2 is shown, wherein the table comprises an identifier portion and a data portion and wherein the identifier portion includes an information used for identifying the respective data in the data portion. In particular, a key (indicated in hexa decimal notation) is followed by a track No. 2 usage right for track No. 2 (indicated in binary notation) and by a counter value of track No. 2, which is set to "3" in line with the purchased usage right.

After the copy operation of track No. 2, a new key-locker-key KLK-2 is randomly selected by the disc drive, used for re-encrypting the updated key-locker table KLT, and stored in the hidden channel. Thus, as indicated in the lower part of Fig. 1, after the first copy of track two, the key-locker table KLT has been re-encrypted by the new key- locker key KLK-2 and updated by decreasing the counter value in the key-locker table KLT to"2".

Accordingly, an extraction and intermediate storage of the original or purchased key-locker table KLT, followed by a re-storing after the first copy operation is useless, since the new key-locker key KLK-2 is now stored in the hidden channel and a decryption of the key-locker table KLT would now no longer be possible by the disc drive.

Accordingly, any "copy and restore attack" is readily detected by the disc drive or at least leads to an error.

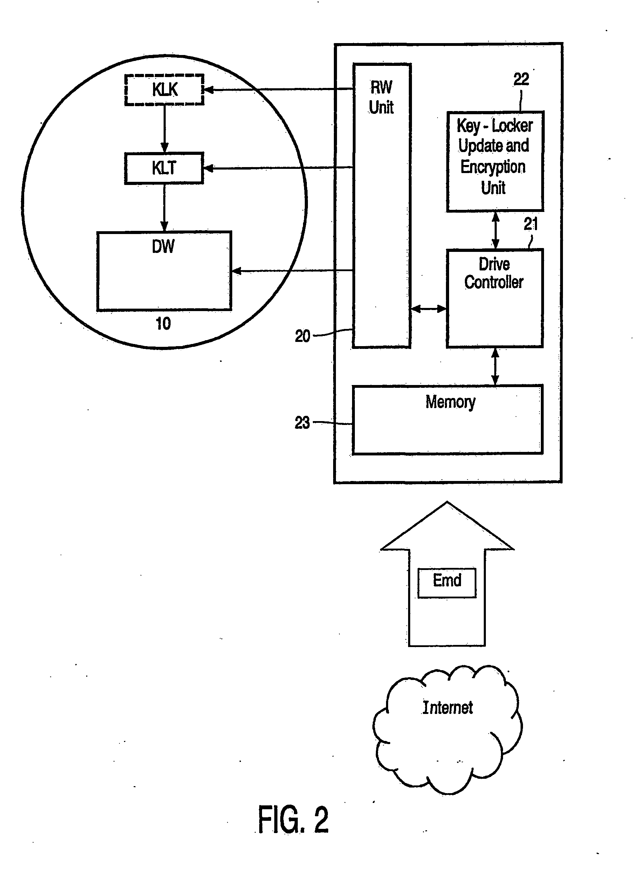

Fig. 2 shows a basic block diagram of a disc drive according to the preferred embodiment of the present invention, which is arranged to generate and write a key-locker table KLT together with a digital work DW (i.e. a music track or the like) on a recordable disc 10 based on usage right acquired together with a purchase from the Internet. In particular, an EMD application which may run on a computer system to provide a corresponding download function stores the purchased scrambled digital work together with the key required for descrambling the digital work, and a description of the usage rights in a memory 23 of the disc drive. As an alternative, the purchased pieces of information may be stored in a memory of the computer system from which they are read by a drive controller 21 of the disc drive.

The drive controller 21 reads the purchased pieces of information from the memory 23 and supplies the key and the usage rights to a key-locker update and encryption unit 22 which is arranged to generate a corresponding key-locker table KLT and to randomly select a key-locker key KLK used for encrypting the key-locker table KLT. The drive controller 21 receives the generated key-locker table KLT and key-locker key KLK and controls a reading and writing (RW) unit 20 so as to write the purchased digital work DW (i.e. music track) and the key-locker table KLT at predetermined positions on the recordable disc 10. Furthermore, the drive controller 21 controls the RW unit 20 so as to store the key- locker key KLK in a hidden channel of the recordable disc 10, which is not accessible by conventional disc drives or disc players. With every change of the purchased usage right due to a consumption (i.e. copy or play operation), the drive controller 21 supplies a corresponding control signal to the key-locker update and encryption unit 22 which updates the key-locker table KLT correspondingly, generates a new randomly selected key-locker key KLK, and encrypts the key-locker table KLT using the new key-locker key KLT. The drive controller 21 receives the updated and scrambled key-locker table KLT and the new key- locker key KLK and controls the RW unit 20 so as to write the re-scrambled key-locker table KLT onto the recordable disc 10 and the new key-locker key KLK in the hidden channel.

This updating and re-encryption by using a new key-locker key KLK is thus performed after each change inside the key-locker table KLT.

If the updated key-locker table KLT indicates that the usage rights have been exercised or consumed, the disk controller 21 refuses the use of the respective digital work, e. g. by transmitting a corresponding error message or control signal to the EMD application.

It is to be noted that the key-locker update and encryption unit 22 may be implemented as a software routine of the drive controller 21.

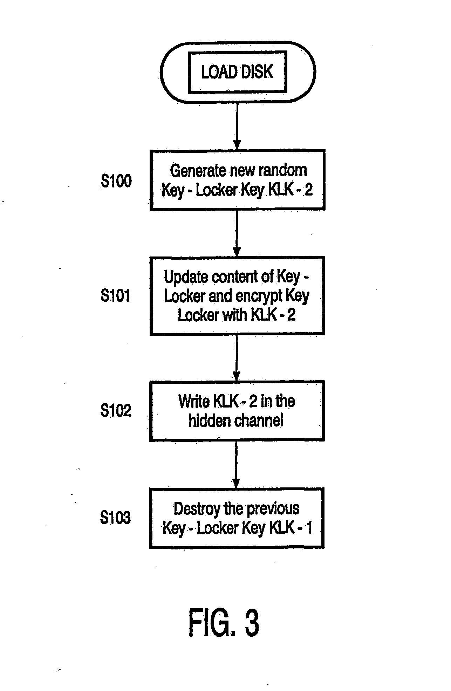

Fig. 3 shows a basic flow diagram of the above procedure for a secure update of the usage rights. According to Fig. 3 a new random key-locker key KLK-2 is generated in step S 100 after the recordable disc has been loaded into the disc drive and a corresponding usage operation of the digital work has been started. Then, the content of the key-locker table KLT is updated and encrypted with the new key-locker key KLK-2 by the key-locker update and encryption unit 22 (step S101). Thereafter, the new key-locker-key KLK-2 is written by the RW unit 20 in the hidden channel HC of the recordable disc 10 (step S 102). This step may be followed by the optional steps of verifying that the new key-locker key KLK-2 and the re-encrypted key-locker table KLT have been written correctly on the recordable disc 10.

Finally, the previous key-locker key KLK-1 may be destroyed by the RW unit 20 (step S103).

According to an alternative modification of the preferred embodiment, the key-locker update and encryption unit 22 may be replaced by a key locker update and verification unit arranged to calculate a checksum over the content of the key-locker table KLT and to store this checksum in the hidden channel HC (instead of the key-locker key KLK). In this case, the key-locker table KLT even does not need to be encrypted. Any manipulation of the content of the key-locker table KLT can be verified by the key-locker update and verification unit by a checking operation using the hidden checksum. Any change of the key-locker table KLT resulting from a consumption or exercise of the purchased usage rights leads to a changed checksum which is written in the hidden channel HC. Thus, the "copy and restore attack" will lead to a mismatch between the actual checksum of the restored key-locker table KLT and the hidden check sum. This mismatch will be detected by the key-locker update and verification unit, such that an error processing or protection mechanism may be started.

Thus, the present invention provides the advantage that a "copy and restore attack" leads to a mismatch between the hidden key-locker key KLK or the alternative hidden checksum and the restored key-locker table KLT. This mismatch either prevents a descrambling of the key-locker table KLT or leads to an error in the verification processing.

Thus, the fraud attack can be detected at the disc drive.

In another embodiment, the hidden channel comprises random data which is used for calculating a checksum over the content of the key-locker table KLT and which checksum is stored in the user data, therefore freely accessible, both for compliant and non- compliant devices. If it is ascertained that the content of the hidden channel can not be deterministically changed by a non-compliant device, the content of the hidden channel may be freely accessible A compliant device can calculate the checksum by reading the random data in the hidden channel an check whether the calculated checksum corresponds to checksum present in the user data. A calculated checksum which differs from the checksum present in the user data indicates that the content of the hidden channel might be tampered with.

It is noted that the present invention is not restricted to the above embodiments, but can be applied to any recording or writing applications which should be protected against "copy and restore attacks". The EMD may be performed by a free distribution of the scrambled digital work DW on a pressed disc or via a broadcast channel.

The key however, is then not distributed together with the content of the digital work. It can be purchased via the Internet. In such a case, a download of the compressed digital work is not necessary, only the keys have to be downloaded. Thereby, the network load and transmission costs can be decreased.

Furthermore, the key-locker table KLT may be arranged as one key-locker table per track. In this case, enough capacity of the hidden channel is required to store a random key-locker key KLK for each key-locker table KLT. The key-locker table KLT could be split into a plurality of key-locker tables if its size becomes too big to perform a re-writing operation at each transaction. Then, each key-locker table KLT will have its own random key-locker key KLK stored in the hidden channel.

The present invention may as well be applied to protect hard discs against "copy and restore attacks". In this case, the hidden channel could be arranged as a memory embedded within the HDD controller. A similar application is possible for flash memory cards or the like. Generally, the present invention can be applied to protect any further recording medium, e. g. magneto-optic recording medium (minidisc) or magnetic tape.

## Claims

1. A method for controlling distribution and use of a digital work, comprising the steps of:
writing the digital work and information relating to a usage right of the digital work to a record carrier, the information relating to the usage right defining one or more conditions which must be satisfied in order for the usage right to be exercised;
updating the attached usage right at each consumption of the usage right; and
refusing the use of the digital work if the one or more conditions are not satisfied;
**characterized in that**:
the usage right is verified using hidden information stored on the record carrier, the hidden information being changed when the usage right is updated.

2. The method according to claim 1, further **characterized in that** the usage right is stored in a key-locker table (KLT) and the hidden information is a checksum calculated over the contents of the key-locker table.

3. The method according to claim 1, further **characterized in that** the hidden information is stored in a hidden channel.

4. The method according to claim 1, wherein the hidden information is freely accessible.

5. The method according to claim 1, further **characterized in that** the hidden information comprises random data.

6. The method according to claim 5, further **characterized in that** the random data is used for calculating a checksum.

7. The method according to claim 1, further **characterized in that** the usage conditions comprise one or more of a number of authorized copies of the digital work that may be made and a number of times the digital work can be played.

8. The method according to claim 1, further **characterized in that** consumption of the usage right occurs when the digital work is one of played and reproduced.

9. The method according to claim 1, further **characterized in that** hidden information is information arranged to be not accessible by at least one of commercial reproducing devices and commercial player devices.

10. A method of controlling distribution and use of a digital work, comprising the steps of:
writing the digital work and attached information relating to a usage right of the digital work to a record carrier, the information relating to the usage right defining one or more conditions which must be satisfied in order for the usage right to be exercised;
updating the attached information relating to the usage right at each consumption of the usage right; and
refusing the use of the digital work when the conditions are not satisfied;
**characterized in that**:
the usage right is encrypted using hidden information stored on the record carrier the hidden information being changed whenever the usage right is updated.

11. The method according to claim 10, further **characterized in that** the hidden information is stored in deliberate errors of a data stream comprising the digital work, the errors being correctable.

12. The method according to claim 10, further **characterized in that** the hidden information is stored in merging bits of a runlength-limited code sequence.

13. The method according to claim 10, further **characterized in that** the hidden information is stored by controlling the polarity of a predetermined runlength of predetermined data or control symbol of a runlength-limited code sequence.

14. The method according to claim 10, further **characterized in that** the hidden information is stored in deliberate errors in the time-base of a data stream comprising the digital work.

15. The method according to claim 10, further **characterized in that** the hidden information is a key used for decrypting the information relating to the usage right, wherein the key is randomly changed whenever the usage right is updated and the information relating to the usage right is re-encrypted using the changed key.

16. The method according to claim 10, further **characterized in that** the hidden information is arranged to be not accessible by commercial reproducing devices.

17. An apparatus for controlling the distribution and use of a digital work comprising:
a writer that writes the digital work and attached information relating to a usage right of the digital work to the record carrier, the information relating to the usage right defining one or more conditions which must be satisfied in order for the usage right to be exercised;
an update unit that updates the attached information relating to the usage right when the usage right is consumed; and
a controller that refuses the use of the digital work when the conditions are not satisfied;
**characterized in that**:
the update unit updates hidden information stored on the record carrier when the usage right is updated.

18. The apparatus according to claim 17, further **characterized in that** the hidden information is used for encrypting the usage right.

19. The apparatus according to claim 17, further **characterized in that** the hidden information is used for verifying the usage right.

20. The apparatus according to claim 17, further **characterized in that** the usage right is consumed when the digital work contained on the record carrier is one of played and recorded.

21. The apparatus according to claim 17, further **characterized in that** the hidden information is stored on the record carrier in a hidden channel.

22. The apparatus according to claim 17, further **characterized in that** the hidden information is freely accessible.

23. The apparatus according to claim 17, further **characterized in that** the hidden information comprises random data.

24. The apparatus of claim 17, further **characterized in that** the hidden information is information arranged to be not accessible by at least one of commercial reproducing devices and commercial player devices.

## Patentansprüche

1. Verfahren zur Steuerung der Verteilung und der Benutzung eines Digitalwerkes, wobei das Verfahren die nachfolgenden Verfahrensschritte umfasst:
das Schreiben des Digitalwerkes und der Information in Bezug auf ein Benutzungsrecht des Digitalwerkes auf einen Aufzeichnungsträger, wobei die Information in Bezug auf das Benutzungsrecht eine oder mehrere Bedingungen definiert, die zur Anwendung des Benutzungsrechtes erfüllt werden müssen;
das Aktualisieren des angehefteten Benutzungsrechtes bei jeder Anwendung des Benutzungsrechtes; und
das Ablehnen der Benutzung des Digitalwerkes, wenn die eine oder mehrere Bedingungen nicht erfüllt werden;
**dadurch gekennzeichnet, dass**
das Benutzungsrecht unter Verwendung versteckter Information auf dem Aufzeichnungsträger überprüft wird, wobei die versteckte Information beim Aktualisieren des Benutzungsrechtes geändert wird.

2. Verfahren nach Anspruch 1, weiterhin **dadurch gekennzeichnet, dass** das Benutzungsrecht in einer Schlüsselkastentabelle ("key-locker table") (KLT) gespeichert wird und die versteckte Information eine über den Inhalt der Schlüsselkastentabelle berechnete Prüfsumme ist.

3. Verfahren nach Anspruch 1, weiterhin **dadurch gekennzeichnet, dass** die versteckte Information in einem versteckten Kanal gespeichert ist.

4. Verfahren nach Anspruch 1, wobei die versteckte Information frei zugreifbar ist.

5. Verfahren nach Anspruch 1, weiterhin **dadurch gekennzeichnet, dass** die versteckte Information beliebige Daten enthält.

6. Verfahren nach Anspruch 5, weiterhin **dadurch gekennzeichnet, dass** die beliebigen Daten zum Berechnen der Prüfsumme verwendet werden.

7. Verfahren nach Anspruch 1, weiterhin **dadurch gekennzeichnet, dass** die Benutzungsbedingungen eine oder mehrere Kopien einer Anzahl autorisierter Kopien des Digitalwerkes aufweisen, die gemacht werden können und einer Anzahl Male, dass das Digitalwerk wiedergegeben werden kann.

8. Verfahren nach Anspruch 1, weiterhin **dadurch gekennzeichnet, dass** Anwendung des Benutzungsrechtes auftritt, wenn das Digitalwerk wiedergegeben oder reproduziert wird.

9. Verfahren nach Anspruch 1, weiterhin **dadurch gekennzeichnet, dass** versteckte Information diejenige Information ist, die derart arrangiert ist, dass diese für kommerzielle Reproduktionsgeräte oder kommerzielle Wiedergabegeräte nicht zugänglich ist.

10. Verfahren zur Steuerung der Verteilung und der Benutzung eines Digitalwerkes, wobei das Verfahren die nachfolgenden Verfahrensschritte umfasst:
das Schreiben des Digitalwerkes und der angehängten Information in Bezug auf ein Benutzungsrecht des Digitalwerkes auf einen Aufzeichnungsträger, wobei die Information in Bezug auf das Benutzungsrecht eine oder mehrere Bedingungen definiert, die zur Anwendung des Benutzungsrechtes erfüllt werden müssen;
das Aktualisieren der angehefteten Information in Bezug auf das Benutzungsrecht bei jeder Anwendung des Benutzungsrechtes; und
das Ablehnen der Benutzung des Digitalwerkes, wenn die Bedingungen nicht erfüllt werden;
**dadurch gekennzeichnet, dass**
das Benutzungsrecht unter Verwendung versteckter Information auf dem Aufzeichnungsträger verschlüsselt ist, wobei die versteckte Information beim Aktualisieren des Benutzungsrechtes geändert wird.

11. Verfahren nach Anspruch 10, weiterhin **dadurch gekennzeichnet, dass** die versteckte Information in absichtlichen Fehlern eines Datenstroms mit dem Digitalwerk gespeichert ist, wobei die Fehler korrigierbar sind.

12. Verfahren nach Anspruch 10, weiterhin **dadurch gekennzeichnet, dass** die versteckte Information in verschmelzenden Bits einer lauflängenbegrenzten Codesequenz gespeichert ist.

13. Verfahren nach Anspruch 10, weiterhin **dadurch gekennzeichnet, dass** die versteckte Information durch Steuerung der Polarität einer vorbestimmten Lauflänge vorbestimmter Daten oder des Steuersymbols eines lauflängenbegrenzten Codesequenz gespeichert wird.

14. Verfahren nach Anspruch 10, weiterhin **dadurch gekennzeichnet, dass** die versteckte Information in absichtlichen Fehlern in der Zeitbasis eines Datenstroms mit dem Digitalwerk gespeichert ist.

15. Verfahren nach Anspruch 10, weiterhin **dadurch gekennzeichnet, dass** die versteckte Information ein Schlüssel ist, verwendet zur Verschlüsselung der Information in Bezug auf das Benutzungsrecht, wobei der Schlüssel beliebig geändert werden kann, und zwar immer, wenn das Benutzungsrecht aktualisiert wird und die Information in Bezug auf das Benutzungsrecht unter Verwendung des geänderten Schlüssels neu verschlüsselt wird.

16. Verfahren nach Anspruch 10, weiterhin **dadurch gekennzeichnet, dass** die versteckte Information derart arrangiert ist, dass diese nicht für kommerzielle Reproduktionsgeräte zugänglich ist.

17. Gerät zur Steuerung der Verteilung und der Benutzung eines Digitalwerkes, wobei das gerät Folgendes umfasst:
einen Schreiber, der das Digitalwerk und die angehängte Information in Bezug auf ein Benutzungsrecht des Digitalwerkes auf den Aufzeichnungsträger schreibt, wobei die Information in Bezug auf das Benutzungsrecht eine oder mehrere Bedingungen definiert, die zur Durchführung des Benutzungsrechtes erfüllt werden müssen;
eine Aktualisierungseinheit, welche die angeheftete Information in Bezug auf das Benutzungsrecht aktualisiert, wenn das Benutzungsrecht angewandt wird; und
einen Controller, der die Benutzung des Digitalwerkes ablehnt, wenn die Bedingungen nicht erfüllt werden;
**dadurch gekennzeichnet, dass**
die Aktualisierungseinheit auf dem Aufzeichnungsträger gespeicherte versteckte Information aktualisiert, wenn das Benutzungsrecht aktualisiert wird.

18. Gerät nach Anspruch 17, weiterhin **dadurch gekennzeichnet, dass** die versteckte Information zur Verschlüsselung des Benutzungsrechtes verwendet wird.

19. Gerät nach Anspruch 17, weiterhin **dadurch gekennzeichnet, dass** die versteckte Information zur Überprüfung des Benutzungsrechtes verwendet wird.

20. Gerät nach Anspruch 17, weiterhin **dadurch gekennzeichnet, dass** das Benutzungsrecht verbraucht wird, wenn das Digitalwerk auf dem Aufzeichnungsträger wiedergegeben oder aufgezeichnet wird.

21. Gerät nach Anspruch 17, weiterhin **dadurch gekennzeichnet, dass** die versteckte Information in einem versteckten Kanal auf dem Aufzeichnungsträger gespeichert wird.

22. Gerät nach Anspruch 17, weiterhin **dadurch gekennzeichnet, dass** die versteckte Information frei zugreifbar ist.

23. Gerät nach Anspruch 17, weiterhin **dadurch gekennzeichnet, dass** die versteckte Information beliebige Daten enthält.

24. Gerat nach Anspruch 17, weiterhin **dadurch gekennzeichnet, dass** die versteckte Information diejenige Information ist, die derart arrangiert ist, dass diese für kommerzielle Reproduktionsgerät oder kommerzielle Wiedergabegeräte nicht zugänglich ist.

## Revendications

1. Procédé pour commander la répartition et l'utilisation d'un travail numérique, comprenant les étapes suivantes consistant à :
écrire le travail numérique et l'information se rapportant à un droit d'usage du travail numérique sur un support d'enregistrement, l'information se rapportant au droit d'usage définissant une ou plusieurs conditions qui doivent être remplies afin que le droit d'usage soit exercé ;
mettre à jour le droit d'usage afférent à chaque consommation du droit d'usage ; et
refuser l'utilisation du travail numérique si l'une ou les plusieurs conditions ne sont pas remplies ;
**caractérisé en ce que** :
le droit d'usage est vérifié à l'aide de l'information cachée qui est stockée sur le support d'enregistrement, l'information cachée étant changée lorsque le droit d'usage est mis à jour.

2. Procédé selon la revendication 1, qui est en outre **caractérisé en ce que** le droit d'usage est stocké dans une table de verrouillage des clés (KLT) et **en ce que** l'information cachée est un total de contrôle qui est calculé sur le contenu de la table de verrouillage des clés.

3. Procédé selon la revendication 1, qui est en outre **caractérisé en ce que** l'information cachée est stockée dans un canal caché.

4. Procédé selon la revendication 1, dans lequel l'information cachée est librement accessible.

5. Procédé selon la revendication 1, qui est en outre **caractérisé en ce que** l'information cachée comprend des données aléatoires.

6. Procédé selon la revendication 5, qui est en outre **caractérisé en ce que** les données aléatoires sont utilisées pour calculer un total de contrôle.

7. Procédé selon la revendication 1, qui est en outre **caractérisé en ce que** les conditions d'usage comprennent une ou plusieurs d'un nombre de copies autorisées du travail numérique qui peuvent être faites et un certain nombre de fois que le travail numérique peut être lu.

8. Procédé selon la revendication 1, qui est en outre **caractérisé en ce que** la consommation du doit d'usage se produit lorsque le travail numérique est un qui est lu et reproduit.

9. Procédé selon la revendication 1, qui est en outre **caractérisé en ce que** l'information cachée est de l'information qui est agencée de manière à ne pas être accessible par au moins un des dispositifs de reproduction commerciaux et des dispositifs de lecture commerciaux.

10. Procédé pour commander la répartition et l'utilisation d'un travail numérique, comprenant les étapes suivantes consistant à :
écrire le travail numérique et l'information afférente se rapportant à un droit d'usage du travail numérique sur un support d'enregistrement, l'information se rapportant au droit d'usage définissant une ou plusieurs conditions qui doivent être remplies afin que le droit d'usage soit exercé ;
mettre à jour l'information afférente se rapportant au droit d'usage à chaque consommation du droit d'usage ; et
refuser l'utilisation du travail numérique lorsque les conditions ne sont pas remplies ;
**caractérisé en ce que** :
le droit d'usage est crypté à l'aide de l'information cachée qui est stockée sur le support d'enregistrement, l'information cachée étant changée chaque fois que le droit d'usage est mis à jour.

11. Procédé selon la revendication 10, qui est en outre **caractérisé en ce que** l'information cachée est stockée dans des erreurs intentionnelles d'un flux de données comprenant le travail numérique, les erreurs étant susceptibles de correction.

12. Procédé selon la revendication 10, qui est en outre **caractérisé en ce que** l'information cachée est stockée dans des bits de fusionnement d'une séquence de codes de longueur limitée.

13. Procédé selon la revendication 10, qui est en outre **caractérisé en ce que** l'information cachée est stockée par la commande de la polarité d'une plage prédéterminée de données prédéterminées d'un symbole de commande d'une séquence de codes de longueur limitée.

14. Procédé selon la revendication 10, qui est en outre **caractérisé en ce que** l'information cachée est stockée dans des erreurs intentionnelles dans la base de temps d'un flux de données comprenant le travail numérique.

15. Procédé selon la revendication 10, qui est en outre **caractérisé en ce que** l'information cachée est une clé qui est utilisée pour décrypter l'information se rapportant au droit d'usage, dans lequel la clé est changée au hasard chaque fois que le droit d'usage est mis à jour et **en ce que** l'information se rapportant au droit d'usage est cryptée à nouveau à l'aide de la clé changée.

16. Procédé selon la revendication 10, qui est en outre **caractérisé en ce que** l'information cachée est agencée de manière à ne pas être accessible par des dispositifs de reproduction commerciaux.

17. Appareil pour commander la répartition et l'utilisation d'un travail numérique, comprenant :
un dispositif d'écriture qui écrit le travail numérique et l'information afférente se rapportant à un droit d'usage du travail numérique sur le support d'enregistrement, l'information se rapportant au droit d'usage définissant une ou plusieurs conditions qui doivent être remplies afin que le droit d'usage soit exercé ;
une unité de mise à jour qui met à jour l'information afférente se rapportant au droit d'usage lorsque le droit d'usage est consommé; et
un contrôleur qui refuse l'utilisation du travail numérique lorsque les conditions ne sont pas remplies ;
**caractérisé en ce que** :
l'unité de mise à jour met à jour l'information cachée qui est stockée sur le support d'enregistrement lorsque le droit d'usage est mis à jour.

18. Appareil selon la revendication 17, qui est en outre **caractérisé en ce que** l'information cachée est utilisée pour crypter le droit d'usage.

19. Appareil selon la revendication 17, qui est en outre **caractérisé en ce que** l'information cachée est utilisée pour vérifier le droit d'usage.

20. Appareil selon la revendication 17, qui est en outre **caractérisé en ce que** le droit d'usage est consommé lorsque le travail numérique qui est contenu sur le support d'enregistrement est un qui est lu et reproduit.

21. Appareil selon la revendication 17, qui est en outre **caractérisé en ce que** l'information cachée est stockée sur le support d'enregistrement dans un canal caché.

22. Appareil selon la revendication 17, qui est en outre **caractérisé en ce que** l'information cachée est librement accessible.

23. Appareil selon la revendication 17, qui est en outre **caractérisé en ce que** l'information cachée comprend des données aléatoires.

24. Appareil selon la revendication 17, qui est en outre **caractérisé en ce que** l'information cachée est de l'information qui est agencée de manière à ne pas être accessible par au moins un des dispositifs de reproduction commerciaux et des dispositifs de lecture commerciaux.
